# FASCICULE DE BREVET EUROPEEN

(11) **EP 3 232 417 B1**
(45) Date de publication et mention de la délivrance du brevet: **06.11.2019**
(21) Numéro de dépôt: 17164339.8
(22) Date de dépôt: 31.03.2017
(51) Int. Cl.: G08G 5/00, G05D 1/00

(54) **SECURISATION DU SEQUENCEMENT DU PLAN DE VOL D'UN AERONEF**
SICHERUNG DER SEQUENZIERUNG DES FLUGPLANS EINES LUFTFAHRZEUGS
PROTECTION OF THE SEQUENCING OF AN AIRCRAFT FLIGHT PLAN

(30) Priorité: 15.04.2016 FR 1600633
(43) Date de publication de la demande: 18.10.2017
(73) Titulaire: THALES, 92400 Courbevoie (FR)
(72) Inventeur: RIEDINGER, Marc, 31036 Toulouse (FR); DEWAS, Emmanuel, 31036 Toulouse (FR); DARBOIS, Alexandre, 31036 Toulouse (FR)
(74) Mandataire: Hnich-Gasri, Naïma

(56) Documents cités:
- EP-A1- 2 818 956
- US-A1- 2014 365 041
- US-B2- 8 660 715

## Description

### Domaine de l'invention

L'invention concerne le domaine technique des systèmes de gestion du vol des aéronefs.

### Etat de la Technique

En avionique, séquencer un plan de vol signifie déterminer le prochain segment de plan de vol (« leg » en anglais) qui doit être volé par un aéronef. Lorsque les conditions sont réunies, l'aéronef volera en effet ce segment de plan de vol déterminé. Dans les faits, le changement de segment de plan de vol, qui se déroule généralement au sein du système de gestion de vol (FMS) est particulièrement délicat à déterminer. Dans un contexte RNP AR (« *Required Navigation Performance Authorisation Required* ») particulièrement exigeant en matière de guidage de l'aéronef, l'opération de séquencement peut devenir particulièrement critique.

Différents problèmes techniques se posent en matière de séquencement, que différentes approches connues visent à améliorer, mais de manière non totalement satisfaisante.

De manière générale, les systèmes FMS connus prévoient la présence de plusieurs systèmes de séquencement redondants. La comparaison des commandes de guidage implique alors une dépendance nécessaire entre les différentes entités redondantes du système. Cette interdépendance peut conduire à des erreurs communes et/ou à la propagation d'erreurs.

Une solution connue selon l'état de la technique est décrite dans le document de brevet US8660715 qui divulgue un procédé et dispositif de surveillance automatique d'opérations aériennes nécessitant une garantie de performance de navigation et de guidage. Le dispositif décrit repose sur un système spécifique, architecturé selon un modèle dual (i.e. redondance, avec deux chaînes de navigation indépendantes). Dans un telle architecture, une panne du système sur l'une de ses chaînes (ou « côtés ») - impliquant la modification non-souhaitée de la trajectoire sur laquelle est asservie l'aéronef - doit pouvoir être détectée et surtout isolée afin de poursuivre le vol sur le côté sans panne. L'approche décrite dans l'état de la technique comprend des moyens pour réaliser des surveillances, afin de vérifier si les deux systèmes de gestion de vol dans cette configuration spécifique sont en condition d'opérer ou de continuer à opérer en mode dual. Cette approche comporte des limitations.

Le document de brevet EP2818956 décrit un système et un procédé de séquençage de points de cheminement latéral insensibles aux défaillances, le système comprenant plusieurs ordinateurs de gestion de vol et une manipulation de notifications et d'actions par rapport à des périodes de temps prédéterminées.

Le document de brevet US8660715 décrit un procédé et un dispositif de surveillance automatique d'opérations aériennes nécessitant une garantie de performance de navigation et de guidage, le dispositif comportant des moyens pour vérifier si les systèmes de gestion de vol sont en mesure d'opérer en mode dual.

Il existe un besoin pour des systèmes et des procédés avancés de gestion du séquencement du plan de vol d'un aéronef.

### Résumé de l'invention

L'invention concerne un procédé de manipulation de segments de plan de vol d'un aéronef. Un résultat de calcul avionique, comme un séquencement de plan de vol, est sélectionné parmi une pluralité de résultats déterminés par une pluralité de systèmes exécutés en parallèle et mis en concurrence, chaque système communiquant à au moins une partie des autres systèmes des conditions à satisfaire par le résultat d'un calcul, le procédé comprenant les étapes consistant à ce qu'un système donné parmi la pluralité de systèmes partage son propre résultat de calcul avec au moins un autre système si et seulement si son propre résultat de calcul satisfait les conditions reçues d'au moins un autre système. Des développements décrivent notamment différentes modalités de négociation et/ou de sélection des résultats, le passage en indépendant et/ou la désactivation d'un système, des mécanismes de vote et/ou de pondération. Des aspects de logiciel et de système sont décrits.

Avantageusement, le système selon l'invention met en œuvre une pluralité de systèmes indépendants, ce qui évite des points communs d'erronés ou d'erreurs sur le séquencement.

Avantageusement, certains modes de réalisation de l'invention permettent de « sécuriser » le séquencement, c'est-à-dire permet d'éviter qu'une erreur dans un système donné ne se propage sur le(s) autres système(s) du système global.

Avantageusement, l'invention utilise des systèmes indépendants mis en concurrence, qui chacun séquencent indépendamment et qui se coordonnent entre eux (de fait, cad sans nécessité d'un organe centralisateur). L'état de la technique décrit des systèmes de type maître-esclave, i.e. des situations dans lesquelles un système en asservit un autre, avec des rôles prédéterminés. Par contraste, dans l'invention, le rôle de maître et/ou d'esclave peut ne pas être pré alloué. L'allocation des rôles s'effectue de fait, cad du fait de la négociation entre systèmes pairs. Cette solution est plus robuste et sécurise le séquencement.

Avantageusement, en gérant différemment le séquencement d'un plan de vol et/ou d'une trajectoire de deux ou plusieurs entités redondantes de systèmes de gestion du vol, les modes de réalisation de l'invention permettent de gagner une meilleure continuité, intégrité et précision de guidage le long du plan de vol et/ou de la trajectoire.

Avantageusement, un mode de réalisation de l'invention permet un guidage précis de l'aéronef, tout en augmentant le niveau d'intégrité et de continuité du système de gestion du vol.

Avantageusement, l'invention peut prendre en compte une variété d'erreurs de calcul dans le système de gestion du vol afin de faire séquencer le plan de vol.

Avantageusement, certains modes de réalisation de l'invention sont de type prédictif plutôt que réactif. La fiabilité est généralement augmentée Certains modes de réalisation de l'invention permettent notamment d'éviter les passages « en indépendant» intempestifs dus au temps réel.

Avantageusement selon l'invention, le séquencement peut être quasi-simultané (i.e. en mode prédictif, plutôt que réactif). Le séquencement en parallèle des différentes entités du système de gestion du vol permet généralement de réaliser un guidage sur des segments de vol actifs identiques et permet donc de calculer une consigne de guidage très proche entre les différentes entités du système. Cette faible différence permet de mettre en place des seuils de comparaison dans la partie surveillance avec des valeurs faibles et donc d'alerter le pilote très rapidement dès l'apparition d'une panne.

Avantageusement, l'invention permet l'atteinte des objectifs dit « hazardous » en matière d'intégrité et des objectifs de continuité, notamment au moyen de l'utilisation d'entités redondantes qui se surveillent, et des objectifs de performance de guidage. Par exemple, l'alerte de sortie d'un couloir à 2 RNP ne se fait pas lorsque l'aéronef sort du couloir, mais la panne doit être détectée avant, par exemple lorsque la commande de guidage tend à faire sortir de ce couloir.

Avantageusement, les modes de réalisation de l'invention sont applicables à des architectures avioniques comportant de multiples entités (deux ou plus), notamment de type dual.

Avantageusement, les modes de réalisation salon l'invention peuvent passer à l'échelle (« *scalable* » en anglais), en utilisant plus que deux entités en parallèle.

Avantageusement selon l'invention, une entité en panne peut être isolée ou exclue du pool de calcul.

Avantageusement, les modes de réalisation de l'invention sont applicables à des architectures avioniques comprenant un séquenceur extérieur au système de gestion de vol FMS (par exemple au sein d'un pilote automatique.)

### Description des figures

Différents aspects et avantages de l'invention vont apparaitre en appui de la description d'un mode préféré d'implémentation de l'invention mais non limitatif, avec référence aux figures ci-dessous :
La figure 1 montre un exemple de système global selon l'invention ;
La figure 2 montre des exemples d'étapes du procédé de séquencement selon l'invention ;
La figure 3 montre des exemples d'étapes du procédé selon un mode de réalisation spécifique de l'invention implémentant un séquenceur ;
La figure 4 montre les étapes du procédé selon l'invention se déroulant dans un système dual.

### Description détaillée de l'invention

Des définitions sont proposées ci-après.

Le terme anglais «leg» correspond à un segment de plan de vol.

Le verbe « séquencer » correspond au fait de changer le segment de plan de vol à voler (du « leg courant/actif » au « prochain leg »)

Le terme « Plan de vol » désigne la liste d'éléments 2D, 3D, 4D ou 5D définissant la route planifiée. Les éléments composant le plan de vol sont des «legs» (e.g. des segments de pseudo-trajectoire normalisés par ARINC 424), des points de plan de vol (ou « waypoints »), des contraintes d'altitude ou de vitesse, des altitudes, etc. Le plan de vol est un chaînage ou enchaînement d'éléments extraits d'une base de données de navigation, saisis par le pilote ou téléchargé. On parle de plan de vol 2D, lorsque ces éléments ne contiennent que des caractéristiques dans le plan horizontal. Un plan de vol 3D rajoute des caractéristiques verticales et/ou de vitesse. Un plan de vol 4D rajoute des contraintes de temps de passage. Un plan de vol 5D permet de gérer la dimension carburant en plus.

Le terme « Trajectoire » désigne la liste d'éléments continus et volables (continuité de dérivée et dérivées compatibles de la mécanique du vol de l'aéronef). Une trajectoire 2D est constituée de segments droits et courbes s'enchainant de façon continue.

Le terme « Système de gestion du vol » d'acronyme FMS (pour « Flight Management System » en anglais) désigne un système embarqué en avionique. Une des fonctions principale d'un système de gestion du vol est de guider l'aéronef le long du plan de vol. Un des objectifs du FMS est notamment d'assister le pilote pendant le vol ; par exemple en gérant et en affichant la route à suivre (« Plan de vol »), en calculant la trajectoire (e.g. trait continu volable) à suivre pour effectuer le plan de vol ; en calculant des consignes de guidage pour le suivi de cette trajectoire par le pilote automatique (caractéristique optionnelle) ; en estimant des temps de passage et une consommation de fuel ; en recevant et envoyant des éléments de plan de vol au autres à d'autres systèmes ; en affichant les positions et estimée de précisions des systèmes de localisation. Pour assurer les objectifs de sûreté (« safety ») assignés au système, celui-ci peut être composé d'une ou plusieurs entités, ce qui permet d'augmenter la disponibilité (et continuité), ainsi que l'intégrité (par surveillances mutuelles). En particulier, le « séquenceur » peut faire partie ou non du système de gestion du vol.

Les exigences de disponibilité et d'intégrité en matière de système de gestion de vol FMS (« Flight Management System ») sont drastiques.

En particulier, les événements de pertes ou d'erreurs relatives au plan de vol et/ou à la trajectoire sont redoutés. Il est généralement requis de démontrer que la probabilité d'occurrence de ces événements est inférieure à 10^-5. Concernant les plateformes pour lesquelles la probabilité d'erreur est inférieure à cette valeur seuil, il est nécessaire et suffisant de démontrer que le matériel est suffisamment fiable.

Les récentes évolutions en matière de procédures de navigation aérienne conduisent néanmoins à relever les exigences liées à la continuité, l'intégrité et la précision du guidage le long d'un plan de vol et/ou d'une trajectoire. Plus particulièrement, la mise en place de procédures de type RNP AR (« *Required Navigation Performance Authorisation Required* ») selon un niveau de performance inférieur à RNP 0.3 NM (mille nautique) demande une intégrité et une continuité de guidage avec un paramétrage (« confinement » ou dans le jargon aéronautique anglo-saxon « *containment* ») de 2^{∗}RNP cohérent d'une classification de condition de panne de type « *hazardous* ». La précision du guidage doit être également plus précise pour permettre de rester dans un couloir de 1xRNP autour de la trajectoire.

Ces procédures de type RNP se caractérisent par i) la capacité de naviguer selon un plan de vol comprenant des points de plan de vol (« waypoints » définis en base de données), et non pas selon des balises au sol, ii) selon un couloir de demi-largeur RNP dans lequel l'aéronef doit se trouver 95% du temps et un couloir de « *containment* » de demi-largeur 2^{∗}RNP (avec un « buffer », c'est-à-dire une marge), iii) la nécessité d'estimer à bord la performance de localisation de l'aéronef et iv) la mise en œuvre d'un dispositif de surveillance embarqué comparant la performance de localisation avec la performance requise sur la procédure en base de données.

Les procédures RNP AR nécessitent une autorisation spéciale, procédure par procédure. Elles nécessitent en outre une qualification de l'équipage. Ces procédures permettent d'avoir des RNP inférieurs à 0.3 et nécessitent donc des surveillances resserrées des systèmes d'un point de vue technique. Des pannes de l'aéronef ne doivent pas amener à sortir du couloir 2RNP (e.g. présence de relief à 2RNP de la trajectoire de référence i.e. plus de « buffer »).

La plupart des solutions RNP AR connues nécessitent de s'appuyer en partie sur des moyens de gestion des pannes (« mitigation »), en particulier par entrainement de l'équipage sur chaque procédure particulière, et également selon des méthodes de nature technique.

Afin de minimiser le coût récurrent lié à une certification procédure par procédure, il est avantageux de pouvoir s'appuyer sur une architecture avionique permettant de démontrer directement les objectifs de sûreté et de précision demandés par les règlementations RNP AR.

Sur les aéronefs actuels, la surveillance des opérations RNP AR est réalisée par le biais de deux fonctions usuelles. Une première fonction surveille la précision et l'intégrité du calcul de position. Une deuxième fonction permet à l'équipage de surveiller le guidage de l'aéronef.

Dans ce cadre RNP-AR, parmi les surveillances nécessaires à l'atteinte des objectifs de sûreté, la surveillance fine des consignes de guidage émises vers le pilote automatique est déterminante car elle permet d'anticiper les sorties de couloir dans le cas d'une erreur du système de gestion du vol (i.e. un « erroné »).

Le terme « séquenceur » désigne les algorithmes ou classe d'algorithmes déterminant ou calculant la condition de séquencement d'un élément du plan de vol et/ou de la trajectoire et envoyant l'événement de séquencement aux entités appropriées du système de gestion du vol. Le terme « séquenceur » peut correspondre à un dispositif implémentant les étapes de séquencement, néanmoins les délimitations physiques de ce dispositif peuvent être variables voire non pertinentes (par exemple dans le cas d'un système distribué) ; dans de tels cas, le terme « séquenceur » correspond au niveau de supervision (avec intention) ou de consolidation (de fait) des différents systèmes pairs.

Le terme « Guidage » désigne des algorithmes permettant d'asservir un aéronef sur une trajectoire planifié. Les algorithmes de guidage mettent en œuvre des automatismes ayant en entrée un élément actif de trajectoire ou de plan de vol et la position mesurée par un ou plusieurs capteurs de l'aéronef. Ces consignes de guidage comprennent généralement a) une consigne de roulis, une vitesse angulaire de roulis ou un segment de trajectoire pour le guidage dans le plan horizontal; b) une assiette, un delta d'assiette, une vitesse angulaire de tangage, un facteur de charge, une accélération verticale, une vitesse verticale, une pente, ou un segment de trajectoire dans le plan vertical ; c) une vitesse, une accélération, une énergie totale, une consigne moteur (N1, EPR, PLA), un objectif temporel de temps pour le guidage en vitesse.

Pour ce faire, le système de gestion de vol détermine ou calcule une ou plusieurs consignes de guidage qui sont transmises au pilote automatique. Pour déterminer un ordre ou une consigne de guidage, les étapes comprennent généralement les étapes consistant à acquérir des paramètres élaborés par des capteurs souvent extérieurs au système de gestion du vol (tels que position de l'aéronef, vitesse, altitude, cap, route sol, vitesse verticale, pente, accélérations, angles, vitesses angulaires,...), à déterminer ou élaborer le plan de vol par saisie manuelle et/ou par téléchargement (le plan de vol ainsi constitué comprenant une liste de « legs » qu'il faut chaîner tel un « squelette » qui sert de support à la trajectoire); à déterminer la trajectoire de l'aéronef à partir de ces éléments du plan de vol (e.g. calcul d'une succession d'éléments s'enchaînant de manière continue et surtout de manière volable i.e. par rapport aux performances de l'aéronef) ; détermination de la position de l'aéronef à partir des différents capteurs embarqués (avantageusement, les modes de réalisation de l'invention utilisent des capteurs de position par satellite, lesquels peuvent être hybridés avec des centrales à inertie de manière à fournir des informations de localisation très précises) ; enfin, le plan de vol et la trajectoire ainsi déterminées sont séquencées. Il s'agit notamment de déterminer quel leg du plan de vol ou quel segment de trajectoire est « actif » par rapport à la position de l'avion. Le système de gestion du vol vérifie de façon cyclique (typiquement toutes les 120 millisecondes) où se trouve l'avion par rapport au plan de vol et à la trajectoire. Lorsque l'avion a dépassé la fin du leg ou segment actif courant, il séquence ce leg / segment actif et le prochain leg / segment devient le nouveau leg / segment actif. Le leg / segment actif devient la nouvelle référence qui sera affichée au pilote et utilisée comme référence pour le guidage. Le guidage proprement dit établit l'écart entre le leg ou segment actif en utilisant la position calculée précédemment et les informations de vecteur-vitesse de l'aéronef fournies par les capteurs. Il en déduit, par des algorithmes de type asservissement, une consigne de guidage. Enfin, les consignes de guidage sont communiquées au pilote automatique.

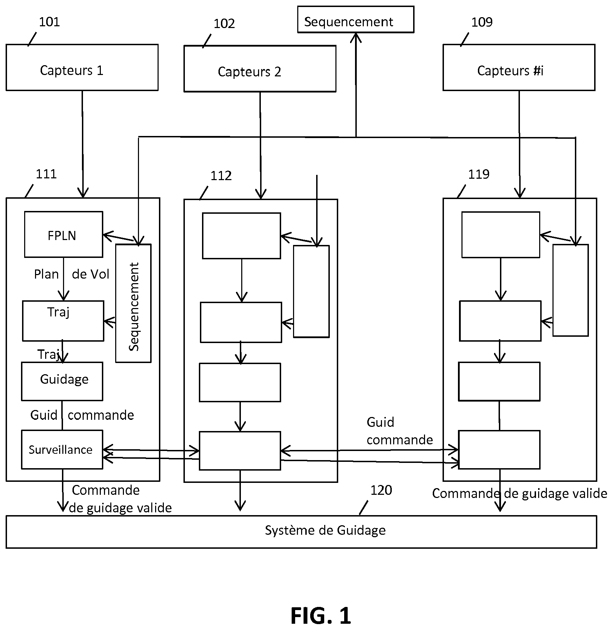

La figure 1 montre un exemple de système global selon l'invention. La figure montre un système global comprenant une pluralité de systèmes (111, 112, ...119), également appelées « entités » par la suite. Les systèmes (111, ...119) déterminent chacun un candidat pour le prochain segment de plan de vol à voler, en fonction des paramètres avion et des capteurs qui leur sont individuellement associés (101, 102, ... 109). Ces systèmes (111, 119) sont « synchronisés » par l'intermédiaire du système de guidage 120 (car partageant un même segment de vol actif ou courant, i.e. effectivement volé par l'aéronef à un instant donné).

Les entités ou systèmes (111, 112, ...119) peuvent être indépendants et/ou redondants (et/ou implicitement faillibles).

L'indépendance des systèmes signifie que les systèmes peuvent accomplir leurs calculs sans en référer aux autres, ou au moins sans en dépendre pour ces calculs précis (dit autrement chaque système peut déterminer de manière autonome son propre segment candidat). L'indépendance n'est généralement pas absolue dans la mesure où les systèmes peuvent partager certains circuits électroniques, dès lors communs, voire des sources d'alimentation communes. Des points de synchronisation divers et additionnels, non décrits ici, peuvent exister entre deux ou plus des systèmes selon l'invention. Dans certains modes de réalisation, les points de panne unique sont minimisées autant que possible (alimentations séparées etc).

Les systèmes selon l'invention sont généralement redondants, matériellement et/ou logiquement (e.g. fonctionnellement). Dans certains modes de réalisation, les systèmes sont strictement identiques. Dans d'autres modes de réalisation, leur fonction est identique (tandis que leurs structures matérielles intimes peuvent varier, précisément pour apporter de la robustesse aux pannes). Dans certains modes de réalisation, le code logiciel exécuté par différents systèmes peut être différent.

Les systèmes implicitement sont faillibles, à l'instar de tout système matériel, i.e. sont susceptibles de pannes ou de défaillances (selon différentes causes ou modalités).

Les systèmes selon l'invention sont généralement exécutés en parallèle, et donc de fait « mis en concurrence » du point de vue d'un niveau d'agrégation supérieur (que chaque système « ignore » cette situation ou la « connaisse », ce dernier cas pouvant impliquer de possibles optimisations internes dans un système le cas échéant.

Pour des raisons de disponibilité, d'intégrité et de continuité, il est avantageux d'implémenter une pluralité de systèmes. Une multiplicité d'entités confère de la redondance et donc de la robustesse aux pannes.

Pour éviter que les multiples entités du système ne divergent, des mécanismes de synchronisation peuvent avantageusement être mis en place entre ces entités.

Dans un mode de réalisation, le même élément ou segment de plan de vol actif ou courant est reçu par les différentes entités ou systèmes mis en concurrence. Par conséquent, les entités concernées séquencent sensiblement en même temps et les commandes de guidage issues du système de guidage 120 calculées par chaque entité pourront être comparées afin de surveiller le système.

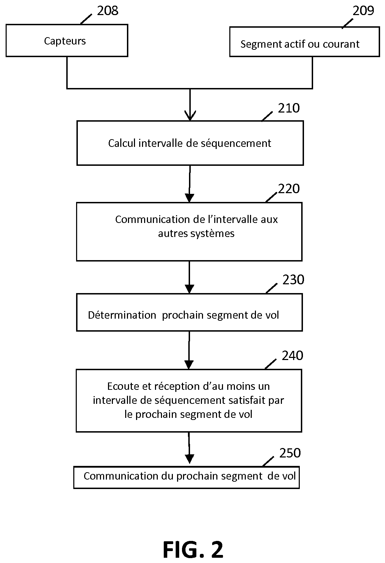

La figure 2 montre des exemples d'étapes du procédé de séquencement selon l'invention.

Dans un mode de réalisation de l'invention, l'émergence d'un résultat de séquencement est le produit d'un résultat de négociation entre systèmes pairs. Des exemples d'étapes sont décrits ci-après.

Dans une première étape 210, au moins un système parmi la pluralité reçoit le segment de vol actif ou courant 208 ainsi que la position fournie par le capteur de position 209 (qui est associé à l'entité de gestion du vol). L'entité détermine (« arme ») un intervalle) de séquencement (ou « fenêtre »).

Dans une seconde étape 220, l'intervalle de séquencement est communiqué de pair à pair aux autres systèmes parmi la pluralité, lesquels effectuent la même première étape de leur côté. La communication est effectuée soit de manière distribuée (sans organe central), soit est centralisée via un organe de régulation intermédiaire (séquenceur par exemple). Un mode hybride combinant communication distribuée et centralisée est également possible.

Dans une troisième étape 230, au moins un système peut déterminer le prochain segment de plan de vol. Le système ne communique pas son résultat (s'il le détermine).

Dans une quatrième étape 240, le système considéré écoute i.e. reçoit les intervalles communiqués par les systèmes tiers.

Dans une cinquième étape 250, lorsqu' un système donné communique le résultat de son séquencement (s'il l'a déterminé) si et seulement ci ce système reçoit d'un système tiers une information selon laquelle son résultat satisfait l'intervalle de séquencement de ce système tiers. La communication du résultat valide peut être effectuée en mode distribué (e.g. via le réseau de pairs, selon une topologie variable, graphe de connexité variable) et/ou centralisé (e.g. via le séquenceur).

Dans une variante de réalisation, lorsqu'un événement de séquencement est publié, chaque entité redondante du système séquence un nouvel élément actif de plan de vol et/ou trajectoire, si seulement si elle a au préalable armé son séquencement. En d'autres termes, un ou plusieurs systèmes peuvent conditionner le calcul de leur prochain segment de vol au fait même d'avoir reçu des informations des autres systèmes et/ou d'avoir finalisé leur propre détermination d'un intervalle de séquencement.

De manière générale la détermination d'un intervalle de séquencement et la détermination d'un séquencement (d'un segment de plan de vol) peuvent être des opérations indépendantes (même si elles peuvent être liées dans d'autres cas), ce qui laisse donc place à différentes variantes de réalisation. En d'autres termes, il peut exister une indépendance entre le calcul de la condition d'armement et l'événement de séquencement, ce qui permet de sécuriser le séquencement en démontrant que la probabilité d'occurrence d'un erroné de calcul de l'armement et de l'événement de séquencement est la multiplication des probabilités d'erroné des 2 entités calculant ces 2 conditions. Cette probabilité devient donc très faible, de l'ordre de 10^{^}-5^{∗}10^{^}-5 = 10^{^}-10, ce qui permet de démontrer le contexte avionique « hazardous » (10^{^}-7).

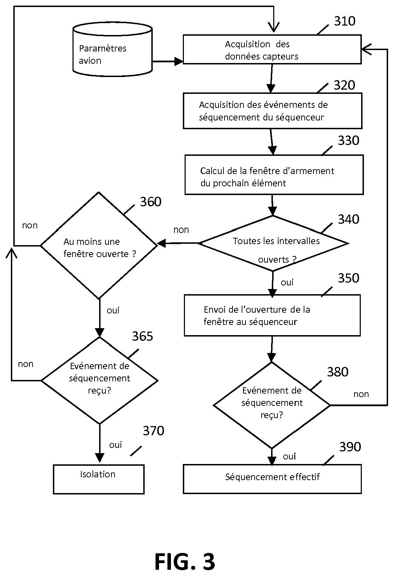

La figure 3 montre des exemples d'étapes du procédé selon un mode de réalisation spécifique de l'invention implémentant un séquenceur.

Les étapes décrites ci-après illustrent des variantes de réalisation quant aux détails des étapes (par exemple en matière de tests visant à établir la complétude des états des sous-systèmes impliqués, etc).

Dans un mode de réalisation de l'invention, la sélection d'un résultat de séquencement « final » est le produit d'un résultat de négociation entre pairs géré par un organe central ou centralisateur. Cet organe peut être intégré dans une des instances 111, 112 ... 119, ou bien être externe. Un tel organe est avantageux dans la mesure où il devient possible de superviser la collectivité des systèmes mis en concurrence (e.g. isolation, exclusion, etc). Des exemples d'étapes sont de ce mode de réalisation spécifique sont décrits ci-après.

Dans une première étape, le séquenceur procède à l'acquisition des données capteurs 310 (i.e. l'ensemble des données qui sont utilisées). Le séquenceur procède ensuite (ou antérieurement ou même simultanément) à l'acquisition des fenêtres de séquencement 320 envoyées par chacune des entités du système de gestion du vol. Le séquenceur détermine ensuite la condition de séquencement du prochain élément à l'étape 330. S'ensuit un test 340 sur les conditions de séquencement du prochain élément et quant au fait de savoir si toutes les fenêtres ont été reçues et ouvertes depuis les différentes entités du système de gestion du vol.

Si la réponse au test 340 est négative, il est déterminé si au moins une des fenêtres est ouverte 360. Si aucun intervalle n'est ouvert, l'étape 310 est réitérée. Si au moins un intervalle est ouvert les informations sont incohérentes (puisque certains intervalles sont par ailleurs fermés). Il est donc procédé à un deuxième test 365 pour s'assurer qu'aucune instance ne va demander de séquencer sur cette base incohérente). Si un événement de séquencement est envoyé aux entités, celles qui n'ont pas d'intervalle ouvert sont isolées (étape 370), étant suspectées de mauvais fonctionnement. A défaut les informations sont cohérentes et il n'est pas procédé au séquencement de manière effective, et le procédé revient à l'étape 310.

Si la réponse au test 340 est affirmative, toutes les informations sont cohérentes et le séquencement est ordonné et envoyé 350 au séquenceur (e.g. au FMS et par suite, le séquencement est effectué dans les faits 380, 390)

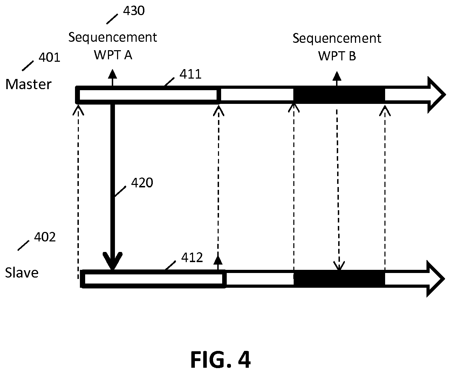

La figure 4 montre les étapes du procédé selon l'invention se déroulant dans un système dual.

En effet, dans un développement, le système selon l'invention peut être un système de type « dual », l'une des deux entités (ou système indépendant) étant le maître 401 (« master en anglais ») et l'autre entité étant l'esclave 402 (« slave » en anglais).

Avantageusement, en utilisant cette configuration duale, il devient possible d'augmenter l'intégrité du guidage (e.g. il peut être démontré que la probabilité d'erreur est inférieure à 10^{^}-7).

Le système maître 401 détermine le prochain segment 430 (i.e. séquence, émission de l'événement de séquencement par le Master) si ledit système maître est dans la fenêtre de séquencement 412 reçue du système esclave (i.e. le système maitre est conforté dans son calcul).

Le système esclave quant à lui reçoit ce segment 430 déterminé par le système maître et exécute alors son séquencement s'il est dans sa propre fenêtre de séquencement. Dans le cas nominal, le système esclave trouvera le même résultat. A défaut, le système esclave peut passer en mode dit « indépendant » dans la terminologie FMS, par exemple s'il voit une requête de séquencement du système maître arriver en dehors de sa fenêtre de séquencement. Si le système maître 401 calcule un événement de séquencement et que la fenêtre du système slave 412 est fermée, le système maître peut lui-même passer en mode dit indépendant, i.e ne plus écouter le système esclave.

Dans un mode de réalisation, le système maitre et le système esclave peuvent commuter, automatiquement ou sur sélection manuelle (pilote).

Lorsque le mode dual ne peut plus fonctionner, par exemple dans le cas d'une panne de fonctionnement de la liaison numérique entre les deux entités, chaque entité peut redevenir indépendante et effectuer ses calculs séparément sans synchronisation mutuelle (mode dégradé)

D'autres modes de réalisation sont décrits ci-après.

De manière générale, il est décrit un système de gestion du vol d'un aéronef nécessitant un niveau de continuité et d'intégrité au moins « *hazardous* » tout en exigeant une performance précise de guidage le long d'un plan de vol ou d'une trajectoire. Dans un développement, le système de séquencement d'un plan de vol et/ou trajectoire met en œuvre un procédé ou un logiciel de séquencement (« séquenceur ») et/ou un logiciel de gestion du vol, avec instanciation multiple de ce logiciel en une ou plusieurs entités physiques sur une ou plusieurs plateformes matérielles (systèmes indépendants). Le procédé comprend une synchronisation du séquencement par l'étape consistant à déterminer, par chacun des systèmes indépendants, ou au moins certains d'entre eux, une fenêtre de séquencement (e.g. des conditions de séquencement) et par l'étape consistant à exécuter le séquencement ordonné par le séquenceur dans l'ensemble des entités lorsque celles-ci (en interaction) voient un événement de séquencement arriver dans la fenêtre de séquencement (la détermination d'un séquencement être effectué par l'un des systèmes indépendants). Si et lorsque la requête de séquencement et la fenêtre de séquencement sont incohérentes, l'entité ou le système indépendant ayant détecté une incohérence peut être isolée. Dans un développement, la fenêtre de séquencement peut être de nature temporelle. Dans un développement, le système est de type « dual », i.e. comprend deux systèmes indépendants, chacune des deux entités calculant une fenêtre de séquencement et un événement de séquencement. Chaque entité envoie son début et fin de fenêtre de séquencement à l'autre entité. Chaque entité exécute son séquencement seulement si une fenêtre de séquencement a été ouverte par l'entité opposée. Dans un développement, il est effectué un passage en mode dit « indépendant » lorsqu'un des systèmes indépendants reçoit la détermination d'un séquencement par le système adverse qui ne vérifie pas sa propre fenêtre de séquencement.

Dans un autre mode de réalisation, non représenté, il est avantageux d'utiliser trois systèmes indépendants (ou plus) pour augmenter le niveau d'intégrité. Ce système est dit « triplex », i.e. comprenant trois entités, l'une des deux entités étant « maître » et au moins une des deux autres entités étant « esclave » (la troisième entité pouvant être en attente (« standby ») de prendre le rôle de l'un ou de l'autre en cas de panne).

Le cas échéant, il est alors effectué une comparaison entre certains résultats de calcul d'au moins deux entités. En général, la valeur absolue de la différence des résultats à surveiller est déterminée puis comparée à un seuil prédéfini (ou à une plage de seuils). Lorsque cette valeur est supérieure à ce seuil pendant une durée supérieure à une durée prédéfinie, une alerte peut être émise pour notifier (au pilote et/ou à un système tiers) un disfonctionnement de l'entité surveillée. Dans un mode de réalisation, e.g. dans certains contextes de vol ou de précision requise de navigation, il est possible de restituer au pilote les différents résultats, en les juxtaposant visuellement par exemple.

Des exemples de situations de séquencement comportant des erreurs ou des systèmes défaillants sont décrits ci-après.

Une erreur peut se produire dans le séquenceur. Par exemple si une erreur de calcul se produit dans le séquenceur et que cet évènement n'est pas calculé (ou mal calculé et donc émis en dehors de la fenêtre de séquencement tel que calculé par les autres entités), la commande de séquencement ne va pas s'exécuter sur les autres entités. Une entité qui a reçu l'événement de séquencement erroné (ou n'a pas reçu d'événement de séquencement dans sa fenêtre de séquencement) peut demander à s'isoler du séquenceur.

Une erreur peut également se produire dans un système qui est à l'écoute, i.e. qui reçoit des intervalles de séquencement et/ou des propositions de segment de plan de vol de la part d'un ou de plusieurs systèmes adverses. Par exemple, si une erreur (e.g. de calcul) se produit dans une entité qui est à l'écoute et que cette entité réalise un calcul erroné de la fenêtre d'armement du séquencement (ou n'arme pas ce séquencement, cad ne vérifie pas cette fenêtre versus le segment actif), le séquenceur peut recevoir une fenêtre de séquencement incohérente avec son propre calcul et l'entité considérée peut être isolée (par le séquenceur ou l'entité s'isolant elle-même d'office).

Une erreur peut se produire en matière de transmission d'un événement de séquencement (par exemple une fenêtre de séquencement: peut ne pas être reçue par les entités à l'écoute, ou bien la fenêtre en question peut ne pas être reçue par le séquenceur).

D'autres modes de réalisation et des généralisations de l'invention sont décrits ci-après.

Selon un aspect de l'invention, une pluralité de systèmes pairs (« à égalité » et indépendants les uns des autres, ou au moins mutuellement indépendants), exécutent indépendamment les uns des autres des calculs de trajectoires et de manipulation du plan de vol. En particulier, chaque système indépendant procède à un calcul de trajectoire et/ou à un séquencement candidat. Chaque système indépendant détermine notamment un ou plusieurs intervalles de validité d'un séquencement. Dans une autre phase (ultérieure ou réalisée de manière concomitante avec les calculs) chaque système indépendant communique aux autres systèmes indépendants les résultats de ses propres calculs et écoute les résultats calculés par ses pairs. Il s'ensuit une étape ou phase de négociation, laquelle peut être asynchrone puisque chaque système indépendant peut ne pas déterminer en même temps son résultat propre. Différentes modalités de sélection d'un résultat en particulier parmi les calculs effectués par les différents systèmes indépendants peuvent être mis en œuvre (par exemple i) sélection du premier résultat disponible au cours du temps, ii) sélection du premier résultat déterminé comme étant valide en considérant des critères prédéfinis de manière absolue ou invariante, iii) comparaison relative des différents résultats disponibles en fonction d'autres critères, notamment dynamiques ou évolutifs au cours du temps, iv) pondération des résultats en fonction de critères de qualité ou de fiabilité des systèmes indépendants ayant communiqué les résultats, etc).

Dans un mode de réalisation, il est divulgué un procédé de gestion de segments de plan de vol d'un aéronef dans un système de gestion de vol comprenant une pluralité de systèmes indépendants (les uns des autres), le procédé comprenant les étapes consistant à : dans chaque système indépendant, déterminer des conditions de changement de segment de plan de vol, lesdites conditions comprenant un intervalle de validité lequel est configurable en temps *et*/*ou* en distance ; par chaque système indépendant, communiquer aux autres systèmes indépendants la fenêtre déterminée par lui ; recevoir une requête de séquencement publiée, ladite requête déterminant le prochain segment de plan de vol à voler et publié; dans chaque système indépendant déterminer (indépendamment) le prochain segment de plan de vol à voler (candidat) en vérifiant du prochain segment de plan de vol à voler tel que publié et des conditions de changement de plan de vol.

De manière générale, il est divulgué un procédé (par exemple mis en œuvre par ordinateur) de sélection d'un résultat de calcul avionique parmi une pluralité de résultats déterminés par une pluralité de systèmes exécutés en parallèle et mis en concurrence, chaque système communiquant à au moins une partie des autres systèmes des conditions à satisfaire par le résultat d'un calcul, le procédé comprenant les étapes consistant à ce qu'un système donné parmi la pluralité de systèmes partage son propre résultat de calcul avec au moins un autre système si et seulement si son propre résultat de calcul satisfait les conditions reçues d'au moins un autre système.

Les systèmes exécutés en parallèle sont redondants, (implicitement) faillibles et indépendants.

Dit autrement, dans un mode de réalisation, selon un niveau d'abstraction élevé et du point de vue d'un système donné parmi les systèmes concurrents selon l'invention, i) un résultat de calcul est déterminé par le système donné, ii) il est reçu par le système donné (depuis un autre système que le système donné) des conditions (adverses) qui doivent être satisfaites par le résultat de calcul déterminé par le système donné iii) si et seulement si ce résultat satisfait les conditions adverses alors le résultat déterminé est considéré comme valide et est communiqué au superviseur des systèmes concurrents.

Dans un développement, le calcul avionique est un calcul de changement de segment de plan de vol.

Il est divulgué en particulier un procédé de manipulation de segments de plan de vol d'un aéronef - mis en œuvre dans un système (ou plusieurs systèmes, ou chaque système parmi une pluralité de systèmes exécutés en parallèle et mis en concurrence-, le procédé comprenant les étapes consistant à: déterminer un prochain segment de plan de vol à effectuer (ou « candidat ») connaissant le segment de vol actif de l'aéronef, ledit prochain segment de plan de vol déterminant un point de jonction correspondant à la fin du segment de plan de vol actif et correspondant au début dudit prochain segment de plan de vol à voler ; déterminer un intervalle de « séquencement » (i.e. de « changement de segment de plan de vol » (ou plus généralement des « conditions » de séquencement), ledit intervalle comprenant au moins un début, ce début de l'intervalle étant situé avant le point de jonction ; communiquer, à destination d'au moins un autre système (ou de chaque système parmi la pluralité), ledit intervalle de changement de segment de plan de vol déterminé.

Le segment de plan de vol qui est volé par l'aéronef à un instant donné est appelé segment « courant » ou segment « actif ». Différents legs sont successivement volés et de fait un séquencement (changement de leg) peut être effectué (ou détecté ou initialisé ou déterminé). L'indication de changement de leg actif peut par exemple provenir de la détection d'un changement de trajectoire qui devient égale à la trajectoire prévue après changement de leg.

Chaque système indépendant détermine une « fenêtre de séquencement », cad des conditions sous lesquelles le prochain segment de vol à voler peut être déterminé. Une fenêtre de séquencement est aussi également appelée « intervalle de validité » (d'un séquencement). Une fenêtre de séquencement comprend des conditions de séquencement.

Dans les détails secondaires, un intervalle peut être défini en temps et/ou en espace. Un intervalle de séquencement (ou fenêtre de séquencement) peut comprendre des données de type espace et/ou de type temps. Par exemple une fenêtre de séquencement peut comprendre un début et une fin, exprimés sous l'angle du temps (« quand », i.e. d'horloge) ou bien de l'espace (« où », i.e. de lieu ou de localité ou de localisation).

Autrement dit, un intervalle de séquencement comprend un marqueur de début et un marqueur de fin déterminant la validité d'un changement de segment de plan de vol donné.

Concernant l'expression temporelle de la fenêtre de séquencement, une variante de réalisation prévoit l'utilisation du mécanisme dit de « final update », qui est un instant temporel précis et défini selon un mécanisme propriétaire. Ce mécanisme consiste à figer géométriquement l'élément de trajectoire quelques secondes avant le passage (effectif) de l'aéronef sur ce nouvel élément, la définition précise d'un segment de trajectoire courbe nécessitant de connaitre la vitesse et le vent au moment où le segment est volé. Cette action s'effectue généralement douze secondes avant le séquencement de l'élément suivant (modulo une durée additionnelle fonction de la géométrie de l'élément et de la vitesse de l'aéronef). Dans une variante de réalisation, cet instant particulier du « final update » est utilisé pour déterminer les limites de l'intervalle de séquencement.

Un segment de plan de vol à voler détermine un « point de jonction » correspondant à la fin du segment de plan de vol courant (ou actif) et correspondant au début dudit prochain segment de plan de vol à voler. Le début de la fenêtre de séquencement est situé en amont du « point de jonction »: le séquencement n'a pas encore eu lieu. La fin de la fenêtre peut être sur ou après (temps) ou en aval (distance) du point de jonction. Dans un développement, le procédé comprend en outre l'étape consistant à recevoir, dans (ou par) au moins un (premier) système depuis au moins un autre (ou second) système, ledit intervalle de changement de segment de plan de vol.

Dans un mode de réalisation, chaque système indépendant communique son début et sa fin de fenêtre de séquencement à chacune des autres systèmes indépendants. Dans un mode de réalisation, si et/ou dès que possible, un système met en œuvre le procédé et communique (le cas échéant) le résultat de son calcul à au moins un autre système concurrent (ou à tous, si possible).

Dans un développement, le procédé comprend en outre l'étape, dans au moins un système, consistant à déterminer un prochain segment de plan de vol candidat si le point de jonction dudit segment de plan de vol candidat est situé dans un intervalle communiqué par au moins un autre système.

Dans au moins un des systèmes parmi la pluralité de systèmes concurrents mettant en œuvre le procédé, il est déterminé un changement de segment de plan de vol candidat si et seulement si ce changement de segment de plan de vol candidat est situé dans la fenêtre déterminée par ledit système et si le séquencement candidat est situé dans une fenêtre communiquée par au moins un autre système.

Les différents pairs mis à égalité déterminent chacun individuellement « leur » prochain segment de plan de vol et ces segments déterminés sont comparés les uns aux autres de manière itérative et collective. Une « négociation » s'engage, et un segment de plan de vol final ou négocié est produit ou « émerge ». La détermination d'un segment de plan de vol s'effectue bien en amont du point de jonction (test de « cohérence »). Par exemple, dans un système global comprenant trois systèmes indépendants égaux, si un premier système indépendant détermine un séquencement candidat en premier, alors un second système indépendant peut vérifier en effet que les conditions de séquencement sont bien remplies pour ce séquencement candidat et le segment de plan de vol courant; il détermine alors un séquencement final. Le troisième système indépendant peut ne pas vérifier les conditions ou les vérifier postérieurement : dès lors, le troisième système indépendant ne détermine pas de séquencement candidat (il reste silencieux).

L'état de la technique procède généralement par i) vote(s), selon ii) des rôles ou priorités ou des hiérarchies préétablies (par exemple maître-esclave). Par contraste, l'invention procède d'un mécanisme comprenant des a) tests ou des comparaisons factuelles, menés par des systèmes pairs b) considérés comme égaux. Dans un mode de réalisation, la première manifestation concluante (par exemple au cours du temps) d'un des systèmes pairs et « mis en concurrence » peut emporter la détermination d'un séquencement dans le système global. Cette détermination par négociation de pair-à-pair (émergence d'un résultat obtenu de manière collective) peut optionnellement être modulée ou optimisée par des pondérations ou hiérarchies ou scores ou critères associés au poids de chacun des systèmes indépendants dans le système global (en effet, certains systèmes indépendants peuvent présenter des indices de fiabilité variables).

Dans un développement, le procédé comprend en outre l'étape, dans un au moins un système, consistant à communiquer le prochain segment de plan de vol candidat, ledit segment devenant le segment de plan de vol sélectionné.

Dans une première situation, si le leg actif est dans la fenêtre de séquencement et qu'au moins un autre système indépendant a communiqué des conditions de séquencement qui sont validées pour le leg actif alors le système indépendant considéré « séquence » de manière effective, i.e. communique au sur-système le prochain segment de plan de vol candidat (par exemple le système de gestion de vol), qui devient par là-même le prochain segment de plan de vol final.

Dans un développement, le procédé comprend en outre l'étape, dans au moins un système, consistant à recevoir d'un autre système un intervalle de changement de segment de plan de vol tandis que ledit au moins un système n'a pas déterminé d'intervalle de changement de segment de plan de vol et comprenant en outre l'étape consistant à désactiver l'un et/ou l'autre desdits des deux systèmes.

Dans un développement, dans au moins un des systèmes, le procédé comprend l'étape consistant à recevoir d'un autre système un intervalle de séquencement alors que le système ne calcule pas de condition de séquencement et comprend l'étape consistant à désactiver l'un et/ou l'autre desdits des deux systèmes.

Un des deux systèmes indépendants est défaillant, ou les deux sont défaillants, sans qu'il soit possible de déterminer lequel sans informations supplémentaire. Le pilote en pratique est notifié de la défaillance ou de l'indétermination ; il ne peut généralement pas choisir et est donc conduit à une intervention manuelle ou au recours à un système tiers (par exemple à un troisième système indépendant). Fréquemment, dans l'incertitude, le pilote augmentera l'altitude de l'aéronef.

Dans un développement, le procédé comprend en outre l'étape, dans au moins un système, consistant à recevoir d'un autre système la détermination d'un intervalle de changement de segment de plan de vol alors que ledit système n'a pas déterminé d'intervalle de changement de segment de plan de vol et comprenant en outre l'étape consistant à désactiver l'un et/ou l'autre des deux systèmes.

Dans un développement, le procédé comprend en outre l'étape, dans au moins un système, consistant à recevoir d'un autre système la détermination d'une condition de séquencement alors que le dit système n'a pas de fenêtre de séquencement ouvert et comprenant l'étape consistant à désactiver l'un et/ou l'autre desdits systèmes indépendants.

L'un et/ou l'autre des systèmes indépendants concernés est donc défaillant et chacun des systèmes continue à calculer de manière indépendante, sans plus continuer à communiquer l'un avec l'autre (les échanges avec les autres systèmes indépendants peuvent néanmoins se poursuivre). Optionnellement, de manière identique à la situation précédente, la discordance entre les systèmes indépendants considérés peut être notifiée au pilote, et les différentes alternatives proposées peuvent lui être restituées (sans que le système global puisse trancher de manière décisive lequel des segments de plan vol candidats est valide et lequel est erroné).

Dans un développement, le procédé comprend en outre, pour un système indépendant, l'étape consistant à ne pas ou ne plus recevoir les conditions de séquencement d'un ou de plusieurs systèmes.

Un système indépendant selon l'invention peut ne pas recevoir les conditions de séquencement d'un ou de plusieurs systèmes. Un système indépendant selon l'invention peut ne plus recevoir les conditions de séquencement d'un ou de plusieurs systèmes, par exemple après avoir reçu une ou plusieurs fois les conditions de séquencement de systèmes tiers.

Dans un développement, le procédé comprend en outre l'étape, pour un système, à ne pas ou ne plus communiquer le segment de plan de vol candidat obtenu.

Un système indépendant selon l'invention peut ne plus déterminer de changement de segment de plan de vol, par exemple après avoir en avoir déterminé un ou plusieurs. Des seuils prédéfinis peuvent définir le nombre minimal et/ou maximal de contribution d'un système indépendant donné.

Dans un développement, le procédé comprend en outre, pour un système de gestion de vol FMS associé à ou comprenant la pluralité de systèmes indépendants, l'étape consistant à isoler, exclure ou arrêter un ou plusieurs systèmes.

Le système de gestion de vol regroupant les différents systèmes indépendants et concurrents peut isoler ou exclure ou désactiver un ou plusieurs systèmes indépendants, par exemple en fonction d'informations additionnelles (niveaux de confiance, de fiabilité, de qualité de service etc). Le terme « isoler » signifie que le système FMS peut continuer à surveiller les résultats issus d'un système isolé, et éventuellement à les prendre en compte en fonction de critères et/ou de contextes prédéfinis. Le terme « exclure » signifie que le système FMS peut ignorer les résultats issus d'un système isolé, alors qu'un autre système avionique y aura toujours accès par exemple. Le terme « arrêter » couvre différentes situations, comprenant la suspension (arrêt temporaire), le redémarrage (arrêt temporaire) ou l'arrêt complet du système indépendant considéré (arrêt permanent).

Dans un développement, le procédé comprend en outre l'étape consistant à afficher à destination du pilote une ou plusieurs indications relatives à une ou plusieurs systèmes isolés ou exclus ou arrêtés.

Un système jugé comme défaillant pouvant être redémarré, le nombre total de systèmes activés au sein du système de gestion de vol peut donc fluctuer au cours du temps. Avantageusement, ce décompte dynamique est notifié au pilote.

Dans un développement, un intervalle de séquencement est de type temporel, le début de l'intervalle fenêtre correspondant à l'événement dit « *final update »* et la fin de la fenêtre étant fonction de la géométrie et de la vitesse de l'aéronef.

L'événement « final update » gèle la définition du segment actif suivant. Le début de la fenêtre de séquencement est généralement de l'ordre de 12 secondes, modulo une durée liée à la géométrie et la vitesse de l'aéronef. La fin de la fenêtre de séquencement est généralement de l'ordre de 20 secondes, modulo une durée liée à la géométrie et la vitesse de l'aéronef.

Dans un développement, une fenêtre de séquencement est de type composite, ledit type composite combinant des aspects de temps et d'espace.

Par exemple, une fenêtre de type hybride correspondra à une définition « valeur minimum entre 5 secondes et 1 mille nautique NM », cette définition permettant avantageusement de prendre en compte la dynamique de l'aéronef.

Dans un développement, le procédé comprend en outre l'étape consistant à afficher à destination du pilote de l'aéronef le segment de plan de vol sélectionné parmi les segments de plan de vol déterminés.

Dans un développement, l'intervalle de séquencement est configurable ou fonction de la valeur RNP.

Par exemple, les valeurs de début et de fin de l'intervalle ou de la fenêtre peuvent être fonction de la valeur en miles nautiques du RNP AR (i.e. selon un faible ou un large couloir, par exemple 400 mètres)

Dans un développement, chaque système est associé à un paramètre prédéfini, le procédé comprenant en outre l'étape consistant à pondérer les résultats des systèmes par lesdits paramètres prédéfinis.

Le paramètre associé à chaque système peut représenter la priorité ou le poids ou la fiabilité ou le niveau de confiance qui est associé au système considéré. En d'autres termes, le schéma de négociation entre pairs décrit peut être modulé par l'application de pondérations, chaque système n'étant plus alors considéré comme égal d'un autre. Un système particulier peut présenter de meilleures caractéristiques en matière de précision de calcul et notamment de localisation (les capteurs GPS, les centrales inertielles peuvent varier en performances).

Dans un développement, ladite pondération comprend des mécanismes de vote selon des seuils prédéfinis ou des plages de seuils prédéfinis.

En particulier, des minorités et/ou des majorités de blocage peuvent être mises en œuvre, également des droits de vétos opposables etc.

Il est divulgué un produit programme d'ordinateur, ledit programme d'ordinateur comprenant des instructions de code permettant d'effectuer les étapes du procédé, lorsque ledit programme est exécuté sur un ordinateur.

Dans un mode de réalisation, le procédé selon l'invention peut être implémenté dans le logiciel du système de gestion du vol FMS.

Dans un mode de réalisation, le système selon l'invention comprend plusieurs entités redondantes et un séquenceur (ou entités de séquence mon) qui déterminent les conditions de séquencement. Matériellement, ce séquenceur peut être implémenté en temps que partie du système de gestion du vol ou lui être extérieur.

Dans un mode de réalisation, le procédé selon l'invention peut être implémenté dans un système de guidage et/ou dans un système de pilotage automatique (qui a reçu le plan de vol et/ou la trajectoire à séquencer).

Dans un développement, le système comprend un nombre N de systèmes, un des systèmes étant de type maître et les N-1 systèmes restants étant de type esclave, un système de type maître ne requérant pas de recevoir un intervalle de séquencement de la part d'un système de type esclave pour déterminer son prochain segment de plan de vol et un système de type esclave requérant la réception d'un intervalle de séquencement de la part d'un système de type maître pour pouvoir déterminer un prochain segment de plan de vol.

Dans un mode de réalisation, des attributs spécifiques et prédéfinis sont associés aux systèmes indépendants, ou au moins à une partie d'entre eux, introduisant de fait une asymétrie dans les prérogatives allouées aux différents pairs composant le système global et/ou les exigences que ces pairs doivent satisfaire.

Dans le sens commun du couple maître/esclave, un système maitre ne requiert pas de recevoir un intervalle de séquencement de la part d'un système esclave pour déterminer son prochain segment de plan de vol. Du fait de sa qualité de système maitre, restant indépendant, il peut communiquer (d'autorité) au système de gestion de vol le(s) segments de plan de vol qu'il détermine. Un système maître peut écouter ou ne pas écouter les communications émanant d'un système esclave.

*A contrario,* un système esclave devient dépendant d'un système maître ce qu'il requiert la réception d'un intervalle de séquencement de la part du système maître pour pouvoir déterminer un prochain segment de plan de vol (ceci implique l'écoute des calculs effectués par le système maître).

Dans un développement, le système comprend un nombre N de systèmes, un des systèmes étant de type maître prédéfini, un des systèmes étant de type esclave prédéfini et les N-2 systèmes restants étant de type indéterminé.

Les systèmes indéterminés n'ont pas de rôle prédéfini. Dans un mode de réalisation, ces systèmes peuvent être configurés pour endosser l'un ou l'autre des rôles, i.e. ils peuvent être en attente d'allocation de leur type, par exemple en fonction des besoins (par exemple pour prendre le relai si le système esclave et/ou le système maître sont défaillants). Les systèmes indépendants sont dits en réserve (« pool »). Dans un mode de réalisation, pour une robustesse extrême du système de séquencement, un très grand nombre de systèmes indépendants peuvent être mis en concurrence.

Dans un développement, le nombre N de systèmes est égal à deux, le système de gestion de vol étant dit dual.

Dans un développement, un système est de type maître prédéfini et l'autre système est de type esclave prédéfini.

Dans un développement, le premier système à séquencer devient de fait le système maître et le second système devient de fait un système esclave dépendant.

Dans un mode de réalisation, les différents systèmes ont des rôles prédéfinis, qui leur sont alloués de manière préalable. Dans un mode de réalisation, tous les systèmes ou au moins une partie d'entre eux n'ont pas de rôles prédéfinis. Dans un mode de réalisation, l'allocation d'un rôle de maître est conditionnée au fait de séquencer de manière valide, les autres systèmes devenant des systèmes esclaves le cas échéant.

Par contraposée, si un système indépendant reçoit d'un autre système un intervalle de séquencement qui n'est pas satisfait par le séquencement déterminé par ledit système indépendant, alors la situation est indéterminée : l'un ou l'autre ou les deux systèmes sont défaillants. Dans un mode de réalisation, l'un et/ou l'autre des systèmes cesse de communiquer les intervalles de séquencement. De fait, dans un système de gestion de vol comprenant un grand nombre de systèmes concurrents, les systèmes « défaillants » (i.e. qui sont dans une situation d'indétermination quant à leur fiabilité) peuvent s'isoler du reste des systèmes (en négociation les uns avec les autres), en ne communiquant plus avec ces derniers.

Dans un développement, le nombre N de systèmes est égal à trois, le système de gestion de vol étant dit en triplex.

Dans un mode de réalisation, trois systèmes indépendants interagissent (« triplication » ou « triplex »). L'une des trois entités est de type maître et au moins un des deux autres systèmes est de type esclave (le troisième système peut être de type maître ou bien de type esclave ou bien être en attente d'endosser l'un ou l'autre rôle).

## Revendications

1. Procédé de manipulation de segments de plan de vol d'un aéronef mis en œuvre dans un ou plusieurs systèmes parmi une pluralité de systèmes exécutant ledit procédé en parallèle et mis en concurrence, le procédé comprenant les étapes consistant à:
- déterminer un prochain segment de plan de vol à effectuer connaissant le segment de vol actif (209) de l'aéronef, ledit prochain segment de plan de vol déterminant un point de jonction dans l'espace correspondant à la fin du segment de plan de vol actif et correspondant au début dudit prochain segment de plan de vol à voler ;
- déterminer un intervalle (210) de changement de segment de plan de vol, la fin de l'intervalle étant situé en aval du point de jonction ;
- communiquer (220), à destination d'au moins un autre système, ledit intervalle de changement de segment de plan de vol déterminé.

2. Procédé selon la revendication 1, comprenant en outre l'étape consistant à recevoir, dans au moins un système depuis au moins un autre système, ledit intervalle de changement de segment de plan de vol.

3. Procédé selon la revendication 2, comprenant en outre l'étape, dans au moins un système, consistant à déterminer un prochain segment de plan de vol candidat si le point de jonction dudit segment de plan de vol candidat est situé dans un intervalle communiqué par au moins un autre système.

4. Procédé selon la revendication 3, comprenant en outre l'étape, dans un au moins un système, consistant à communiquer le prochain segment de plan de vol candidat, ledit segment devenant le segment de plan de vol sélectionné.

5. Procédé selon la revendication 4, comprenant en outre l'étape, dans au moins un système, consistant à recevoir d'un autre système un intervalle de changement de segment de plan de vol tandis que ledit au moins un système n'a pas déterminé d'intervalle de changement de segment de plan de vol et comprenant en outre l'étape consistant à désactiver l'un et/ou l'autre desdits des deux systèmes.

6. Procédé selon l'une quelconque des revendications précédentes, comprenant en outre, pour un système indépendant, à ne pas ou ne plus communiquer le segment de plan de vol candidat obtenu.

7. Procédé selon la revendication 4, comprenant en outre l'étape consistant à afficher à destination du pilote de l'aéronef le segment de plan de vol sélectionné parmi les segments de plan de vol déterminés.

8. Procédé selon l'une quelconque des revendications précédentes, l'intervalle (210) de changement de segment de plan de vol dit intervalle de séquencement étant configurable ou fonction de la valeur RNP.

9. Procédé selon l'une quelconque des revendications précédentes, chaque système étant associé à un paramètre prédéfini, le procédé comprenant en outre l'étape consistant à pondérer les déterminations d'intervalles de changement de segment de plan de vol des systèmes par lesdits paramètres prédéfinis.

10. Procédé selon la revendication 9, ladite pondération comprenant des mécanismes de vote selon des seuils prédéfinis ou des plages de seuils prédéfinis.

11. Produit programme d'ordinateur, ledit programme d'ordinateur comprenant des instructions de code permettant d'effectuer les étapes du procédé selon l'une quelconque des revendications 1 à 10, lorsque ledit programme est exécuté sur un ordinateur.

12. Système comprenant des moyens pour mettre en œuvre les étapes du procédé selon l'une quelconque des revendications 1 à 10.

13. Système selon la revendication 12, le système comprenant un système de gestion de vol ou FMS.

14. Système comprenant un nombre N de systèmes selon la revendication 12 ou 13, un des systèmes étant de type maître et les N-1 systèmes restants étant de type esclave,
un système de type maître ne requérant pas de recevoir un intervalle de séquencement de la part d'un système de type esclave pour déterminer son prochain segment de plan de vol et
un système de type esclave requérant la réception d'un intervalle de séquencement de la part d'un système de type maître pour pouvoir déterminer un prochain segment de plan de vol.

15. Système comprenant un nombre N de systèmes selon la revendication 12 ou 13, un des systèmes étant de type maître prédéfini, un des systèmes étant de type esclave prédéfini et les N-2 systèmes restants étant de type indéterminé.

16. Système selon la revendication 14 ou 15, le nombre N de systèmes étant égal à deux, le système de gestion de vol étant dit dual.

17. Système selon la revendication 16, un système étant de type maître prédéfini et l'autre système étant de type esclave prédéfini.

18. Système selon la revendication 17, le premier système à séquencer devenant de fait le système maître et le second système devant de fait un système esclave dépendant.

19. Système selon la revendication 14 ou 15, le nombre N de systèmes étant égal à trois, le système de gestion de vol étant dit en triplex.

## Patentansprüche

1. Verfahren zum Manipulieren von Flugplansegmenten eines Luftfahrzeugs, durchgeführt in einem oder mehreren aus einer Mehrzahl von Systemen, die das Verfahren parallel und gleichzeitig ausführen, wobei das Verfahren die folgenden Schritte beinhaltet:
- Bestimmen eines nächsten auszuführenden Flugplansegments in Kenntnis des aktiven Flugsegments (209) des Luftfahrzeugs, wobei das nächste Flugplansegment einen Übergangspunkt im Raum bestimmt, der dem Ende des aktiven Flugplansegments und dem Anfang des nächsten zu durchfliegenden Flugplansegments entspricht;
- Bestimmen eines Flugplansegment-Wechselintervalls (210), wobei sich das Ende des Intervalls unterhalb des Übergangspunkts befindet;
- Übermitteln (220) des bestimmten Flugplansegment-Wechselintervalls an wenigstens ein anderes System.

2. Verfahren nach Anspruch 1, das ferner einen Schritt bestehend aus dem Empfangen, in wenigstens einem System von wenigstens einem anderen System, des Flugbahnsegment-Wechselintervalls beinhaltet.

3. Verfahren nach Anspruch 2, das ferner einen Schritt, in wenigstens einem System, beinhaltet, der im Bestimmen eines nächsten Kandidaten-Flugplansegments besteht, wenn sich der Übergangspunkt des Kandidaten-Flugplansegments in einem Intervall befindet, das durch wenigstens ein anderes System übermittelt wurde.

4. Verfahren nach Anspruch 3, das ferner einen Schritt, in wenigstens einem System, beinhaltet, der im Übermitteln des nächsten Kandidaten-Flugplansegments besteht, wobei das Segment zum gewählten Flugplansegment wird.

5. Verfahren nach Anspruch 4, das ferner einen Schritt, in wenigstens einem System, beinhaltet, der im Empfangen eines Flugplansegment-Wechselintervalls von einem anderen System besteht, während das wenigstens eine System kein Flugplansegment-Wechselintervall bestimmt hat, und das ferner einen Schritt beinhaltet, der im Deaktivieren des einen und/oder des anderen der beiden Systeme besteht.

6. Verfahren nach einem der vorherigen Ansprüche, das ferner, für ein unabhängiges System, beinhaltet, das erhaltene Kandidaten-Flugplansegment nicht oder nicht mehr zu übermitteln.

7. Verfahren nach Anspruch 4, das ferner einen Schritt beinhaltet, der darin besteht, dem Piloten des Flugzeugs das aus den bestimmten Flugplansegmenten ausgewählte Flugplansegment anzuzeigen.

8. Verfahren nach einem der vorherigen Ansprüche, wobei das Flugplansegment-Wechselintervall (210), Sequenzierungsintervall genannt, konfigurierbar ist oder eine Funktion des RNP-Wertes ist.

9. Verfahren nach einem der vorherigen Ansprüche, wobei jedes System mit einem vordefinierten Parameter assoziiert ist, wobei das Verfahren ferner den Schritt beinhaltet, der darin besteht, die Bestimmungen von Flugplansegment-Wechselintervallen von Systemen anhand der vordefinierten Parameter zu gewichten.

10. Verfahren nach Anspruch 9, wobei das Gewichten Auswahlmechanismen gemäß vordefinierten Schwellen oder vordefinierten Schwellenbereichen umfasst.

11. Computerprogrammprodukt, wobei das Computerprogramm Code-Befehle umfasst, die es zulassen, die Schritte des Verfahrens nach einem der Ansprüche 1 bis 10 durchzuführen, wenn das Programm auf einem Computer ausgeführt wird.

12. System, das Mittel zum Durchführen der Schritte des Verfahrens nach einem der Ansprüche 1 bis 10 umfasst.

13. System nach Anspruch 12, wobei das System ein Flugmanagementsystem oder FMS umfasst.

14. System, das eine Anzahl N von Systemen nach Anspruch 12 oder 13 umfasst, wobei eines der Systeme vom Master-Typ ist und die übrigen N-1 Systeme vom Slave-Typ sind,
wobei ein System des Master-Typs kein Sequenzierungsintervall von einem System des Slave-Typs zu empfangen braucht, um sein nächstes Flugplansegment zu bestimmen, und
ein System des Slave-Typs den Empfang eines Sequenzierungsintervalls von einem System des Master-Typs erfordert, um ein nächstes Flugplansegment bestimmen zu können.

15. System, das eine Anzahl N von Systemen nach Anspruch 12 oder 13 umfasst, wobei eines der Systeme vom vordefinierten Master-Typ ist, wobei eines der Systeme vom vordefinierten Slave-Typ ist und die übrigen N-2 Systeme von einem unbestimmten Typ sind.

16. System nach Anspruch 14 oder 15, wobei, wenn die Anzahl N von Systemen gleich zwei ist, das Flugmanagementsystem vom dualen Typ ist.

17. System nach Anspruch 16, wobei ein System vom vordefinierten Master-Typ ist und das andere System vom vordefinierten Slave-Typ ist.

18. System nach Anspruch 17, wobei das erste zu sequenzierende System tatsächlich zum Master-System wird und das zweite System tatsächlich zu einem abhängigen Slave-System wird.

19. System nach Anspruch 14 oder 15, wobei, wenn die Anzahl N von Systemen gleich drei ist, das Flugmanagementsystem vom Triplex-Typ ist.

## Claims

1. Method for manipulating aircraft flight plan segments implemented in one or more systems from among a plurality of systems executing said method in parallel and placed in competition, comprising the steps consisting in:
- determining a next flight plan segment to be performed knowing the active flight segment (209) of the aircraft, said next flight plan segment determining a junction point in space corresponding to the end of the active flight plan segment and corresponding to the start of said next flight plan segment to be flown;
- determining an interval (210) of change of flight plan segment, the end of the interval being situated downstream the junction point;
- communicating (220), to at least one other system, said interval of change of flight plan segment determined.

2. Method according to claim 1, furthermore comprising the step consisting in receiving, in at least one system from at least one other system, said interval of change of flight plan segment.

3. Method according to claim 2, furthermore comprising the step, in at least one system, consisting in determining a next candidate flight plan segment if the junction point of said candidate flight plan segment is situated in an interval communicated by at least one other system.

4. Method according to claim 3, furthermore comprising the step, in an at least one system, consisting in communicating the next candidate flight plan segment, said segment becoming the selected flight plan segment.

5. Method according to claim 4, furthermore comprising the step, in at least one system, consisting in receiving from another system an interval of change of flight plan segment while said at least one system has not determined any interval of change of flight plan segment and furthermore comprising the step consisting in deactivating the one and/or the other of said of the two systems.

6. Method according to any one of the preceding claims, furthermore comprising, for an independent system, not or no longer communicating the candidate flight plan segment obtained.

7. Method according to claim 4, furthermore comprising the step consisting in displaying to the pilot of the aircraft the flight plan segment selected from among the flight plan segments determined.

8. Method according to any one of the preceding claims, the interval (210) of change of flight plan segment termed the sequencing interval being configurable or dependent on the RNP value.

9. Method according to any one of the preceding claims, each system being associated with a predefined parameter, the method furthermore comprising the step consisting in weighting the determinations of intervals of change of flight plan segment of the systems by said predefined parameters.

10. Method according to claim 9, said weighting comprising mechanisms for voting according to predefined thresholds or predefined spans of thresholds.

11. Computer program product, said computer program comprising code instructions making it possible to perform the steps of the method according to any one of claims 1 to 10, when said program is executed on a computer.

12. System comprising means for implementing the steps of the method according to any one of claims 1 to 10.

13. System according to claim 12, the system comprising a flight management system or FMS.

14. System comprising a number N of systems according to claim 12 or 13, one of the systems being of master type and the N-1 remaining systems being of slave type,
a system of master type not requiring to receive a sequencing interval from a system of slave type in order to determine its next flight plan segment and
a system of slave type requiring the receipt of a sequencing interval from a system of master type in order to be able to determine a next flight plan segment.

15. System comprising a number N of systems according to claim 12 or 13, one of the systems being of predefined master type, one of the systems being of predefined slave type and the N-2 remaining systems being of indeterminate type.

16. System according to claim 14 or 15, the number N of systems being equal to two, the flight management system being termed dual.

17. System according to claim 16, one system being of predefined master type and the other system being of predefined slave type.

18. System according to claim 17, the first system that is to be sequenced becoming in fact the master system and the second system becoming in fact a dependent slave system.

19. System according to claim 14 or 15, the number N of systems being equal to three, the flight management system being termed triplex.
